# EUROPEAN PATENT APPLICATION

(11) **EP 4 654 018 A1**
(43) Date of publication of application: **26.11.2025**
(21) Application number: 24177241.7
(22) Date of filing: 22.05.2024
(51) Int. Cl.: G06F 11/07, G06F 21/77

(54) **METHOD FOR IMPROVING THE RESILIENCE OF AN ELECTRONIC DEVICE TO FAULT ATTACKS, CORRESPONDING COMPUTER PROGRAM PRODUCT AND DEVICES**

(71) Applicant: Nagravision Sarl, 1033 Cheseaux-sur-Lausanne (CH)
(72) Inventor: Kaufmann, Thierry, 1033 CHESEAUX-SUR-LAUSANNE (CH); Pelletier, Hervé, 1033 CHESEAUX-SUR-LAUSANNE (CH)
(74) Representative: Santarelli

(57) **Abstract**

A method is proposed for improving the resilience of an electronic device to fault attacks, the electronic device implementing a fault detection mechanism during the execution of a command. According to such method, the electronic device executes:
- executing a command; and
- executing, after a predetermined period of time counted from the end of the execution of the command, at least one operation changing the internal state of the electronic device to an internal state indicative that a fault was detected or not during the execution of the command.

## Description

### 1. FIELD OF THE DISCLOSURE

The field of the disclosure is that of fault attacks of electronic devices.

More specifically, the disclosure relates to countermeasures against such fault attacks.

The disclosure can be of interest in any field wherein fault attacks need to be addressed. This is the case for instance in the field of cryptography, e.g. for secure communications, for end-to-end encryption (e.g. for the diffusion of content in a pay-TV system), for storing data (e.g. passwords), etc.

### 2. TECHNOLOGICAL BACKGROUND

With the development of fault attacks of electronic devices (e.g. implementing a processor or a dedicated computing machine), one major countermeasure for system designers, in terms of security, is to catch this fault.

Such fault attack is e.g. based on the use of a laser beam or of an electromagnetic field to induce a fault in the attacked electronic device. In order to detect a potential fault attack, the electronic device may comprise a fault detection mechanism (or equivalently an attack detection mechanism). For instance, the electronic device may comprise a sensor to detect the laser beam or the electromagnetic field. Alternatively, the electronic device may comprise a detection mechanism for directly detecting a fault in the execution of one (or more) command (or instruction).

Upon detection of the attack, a decision is often made to reduce the functionalities of the attacked electronic device (e.g. through infinite reset, no more communication, etc.) or at least to keep track of the fault detection, e.g. through predefined policy rules. To achieve this, a writing in a non-volatile memory (EEPROM, FLASH, MRAM, etc.) is often required. Unfortunately, on some systems (e.g. in embedded system like wireless products, or loT products, etc.) such writing is visible in terms of leakage. Consequently, the attacker can shut down the attacked electronic device quickly when such behaviour is detected. Doing so, the attacker may prevent the attacked electronic device from going into a state associated to reduced functionalities or to keep track of the fault detection.

There is thus a need for a solution for improving the countermeasures against fault attacks, in particular for masking that a fault has been detected by the attacked electronic device.

### 3. SUMMARY

A particular aspect of the present disclosure relates to a method for improving the resilience of an electronic device to fault attacks, the electronic device implementing a fault detection mechanism during the execution of at least one command. According to such method, the electronic device executes:
- executing a first command; and
- executing, after a predetermined period of time counted from an end of the execution of the first command, at least one operation changing the internal state of the electronic device to an internal state indicative that a fault was detected or not during the execution of the first command.

Thus, the present disclosure proposes a new and inventive solution for improving the resilience of an electronic device to fault attacks.

Indeed, according to known technics, an operation to change the internal state of the electronic device to an internal state indicative that a fault was detected during the execution of a command is executed before the end of the considered command (i.e. up to the time corresponding to the end of the execution of the considered command). For instance, in systems based on master/slave communications (like e.g. ISO 7816 smart card communication) the duration of the execution of the command (i.e. defining the time window during which the operation to change the internal state of the electronic device may occur, e.g. an operation such as an unexpected writing in a non-volatile memory (NVM) of the electronic device) is fixed and is restricted by the beginning and the end of a communication exchange between the master and the slave. Thus, an attacker classically monitors the potential execution of such operation(s) changing the internal state of the electronic device during this duration of the execution of the command to decide if the attack was detected or not.

Conversely, according to the present technic, the execution of such operation(s) changing the internal state of the electronic device to an internal state indicative that (e.g. according to predefined policy rules) a fault was detected during the execution of the considered command is performed after the end of the execution of the considered command, i.e. during a time window wherein the attacker does not expect the execution of such operation(s). This allows masking that a fault has been detected by the attacked electronic device, and thus improving the resilience of the attacked electronic device against fault attacks. Furthermore, the new internal state may also be indicative that (e.g. according to the predefined policy rules) a fault was not detected during the execution of the considered command, thus further improving the masking of the meaning of the change in the internal state from the attacker's point of view.

In some embodiments, the electronic device executes:
- generating a first random number;
- deciding, based on the first random number, to execute or not said executing the at least one operation changing the internal state of the electronic device; and, if it is decided to execute the operation: executing said executing the at least one operation.

Thus, the operation(s) changing the internal state of the electronic device is not systematically executed, even if a fault is detected.

Consequently, the attacker cannot learn from a systematic execution of such operation that corresponding faults are detected by the attacked electronic device.

This allows further masking that a fault has been detected by the attacked electronic device. This further improves the resilience of the attacked electronic device against fault attacks.

In some embodiments, if, during said deciding, it is decided to not execute the at least one operation: not executing said executing the at least one operation.

In some embodiments, the electronic device executes: generating a second random number. The predetermined period of time is a function of the second random number.

Thus, the time at which the operation(s) is executed is randomized. Consequently, the attacker cannot learn from a systematic execution of such operation that corresponding faults are detected by the attacked electronic device. This allows further masking that a fault has been detected by the attacked electronic device. This further improves the resilience of the attacked electronic device against fault attacks.

In some embodiments, the electronic device executes: executing a second command after said executing the first command. If the second command is executed before an end of the period of time, the at least one operation is executed substantially at the time the execution of the second command starts instead of being executed after the period of time counted from the end of the execution of the first command.

Thus, the electronic device executes the operation before another command is to be executed. The electronic device thus does not execute the other command before the fault handling of the first command is done.

In some embodiments, if a fault is detected by the fault detection mechanism during the execution of the first command, the at least one operation changes the internal state of the electronic device to an internal state indicative that a fault was detected. For instance, the at least one operation belongs to the group comprising:
- writing in a non-volatile memory an information indicative that a fault was detected;
- shutting-down the electronic device;
- writing in a non-volatile memory an instruction preventing the electronic device from booting; and
- writing in a non-volatile memory a fake data in place of sensitive data. For instance, the electronic device writes random data or zeros in place of the sensitive data (e.g. a cryptographic key). This corresponds e.g. to a zeroisation mechanism.

In some embodiments, if a fault is not detected by the fault detection mechanism during the execution of the first command, the at least one operation changes the internal state of the electronic device to another internal state indicative that no fault was detected. For instance, the at least one operation belongs to the group comprising:
- writing in a non-volatile memory dummy data; and
- writing in a non-volatile memory an information indicative that no fault was detected.

Another aspect of the present disclosure relates to a computer program product comprising program code instructions for implementing the above-mentioned method for improving the resilience of an electronic device to fault attacks (in any of the different embodiments discussed above), when the program is executed on a computer or a processor.

Another aspect of the present disclosure relates to an electronic device comprising means configured for executing all or part of the steps of the above-mentioned method for improving the resilience of an electronic device to fault attacks (in any of the different embodiments discussed above). Thus, the features and advantages of this first device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates an apparatus comprising an electronic device according to one embodiment of the present disclosure;
- Figure 2 illustrates the timeframe for executing an operation changing the internal state of the electronic device of Figure 1 according to one embodiment of the present disclosure;
- Figure 3 illustrates an example of the structural blocks of the electronic device of Figure 1 allowing steps of the method of Figure 4 to be executed according to one embodiment of the present disclosure;
- Figure 4 illustrates a flowchart of a method for improving the resilience of the electronic device of Figure 1 to fault attacks according to one embodiment of the present disclosure.

### 5. DETAILED DESCRIPTION

In all of the figures of the present document, the same numerical reference signs designate similar elements and steps.

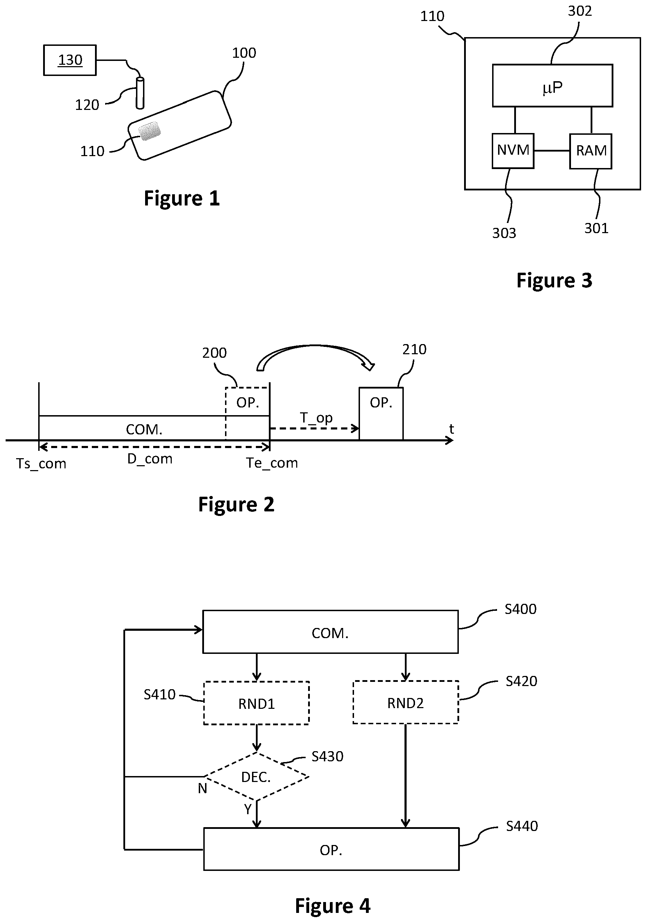

Referring now to **Figure 1****,** we illustrate an apparatus 100 comprising an electronic device 110 according to one embodiment of the present disclosure.

More particularly, the electronic device 110 implements e.g. a processor 302 or a dedicated computing machine as discussed below in relation with Figure 3. As such, the electronic device 110 is liable to fault attacks, e.g. through the laser source 120 or any equivalent means (like e.g. an electromagnetic field source) for performing the attack. The laser source 120 is driven by a computer 130. The computer 130 may also be used by the attacker to perform an analysis of the reaction of the electronic device 110 to the fault attack.

In the present embodiment, the apparatus 100 is a smart card. However, in other embodiments, the apparatus 100 is any electronic apparatus that implements an electronic device 110 liable to fault attacks. As such, the apparatus 100 may be a personal computer, a smartphone, a set-top box...

Back to Figure 1, the electronic device 110 implements a fault detection mechanism. Such mechanism takes the form e.g. of a sensor to detect a laser beam or an electromagnetic field attacking the electronic device 110. Alternatively, such mechanism may take the form of a detection mechanism for directly detecting a fault in the execution of one (or more) command (or instruction) by the processor 302.

Referring now to **Figure 2****,** the execution of a given command (or instruction) by the electronic device 110 takes place between the start time Ts_com and the end time Te_com. The duration D_com between the start time Ts_com and the end time Te_com thus corresponds to the effective duration of the execution of the considered command. We thus get D_com = Te_com - Ts_com. The command may be any command (or instruction) that can be executed by the electronic device 110, e.g. a write command, a read command, a add command, etc.

For instance, in systems based on master/slave communication (like e.g. ISO 7816 smart card communication) the duration D_com of the execution of a command is fixed and is restricted by the beginning and the end of a communication exchange between the master and the slave. In the present embodiment wherein the apparatus 100 is a smart card, the master may be a card reader and the slave the electronic device 110.

As discussed in the "Technical background" section, when a fault attack is detected, according to known technics a decision is often made to reduce the functionalities of the attacked electronic device 110 (e.g. through infinite reset, no more communication, etc.) or at least to keep track of the fault detection, e.g. through predefined policy rules. To achieve this, an operation 200 changing the internal state of the electronic device 110 to an internal state indicative that a fault was detected is executed. For instance, a writing in a non-volatile memory (e.g. an electrically-erasable programmable read-only memory (EEPROM), a FLASH memory, a magnetoresistive random access memory (MRAM), etc.) is executed in order to change such internal state. However, according to such known technics, the operation 200 is executed during the duration D_com of the execution of a command.

Conversely, in some embodiments of the present disclosure, an operation 210 changing the internal state of the electronic device 110 to an internal state indicative that a fault was detected or not is executed after a predetermined period of time T_op (e.g. a non-vanishing or non-null period of time) counted from the end of the execution of the considered command. This behavior is detailed more deeply below in relation with Figure 4.

In order to be able to implement all or part of the steps of the method for improving the resilience of the electronic device 110 to fault attacks in the various embodiments disclosed below in relationship with Figure 4, in some embodiments the electronic device 110 comprises (**Figure 3**):
- a non-volatile memory 303 (e.g. a one-time programmable read-only memory (OTP ROM), a hard disk, a flash memory, an EEPROM, a MRAM, etc.);
- a volatile memory 301 (e.g. a random-access memory or RAM) and a processor 302.

The non-volatile memory 303 is a non-transitory computer-readable carrier medium. It stores executable program code instructions, which are executed by the processor 302 in order to enable implementation of some steps of the method described below (method for improving the resilience of the electronic device 110 to fault attacks) in the various embodiments disclosed in relationship with Figure 4.

For instance, upon initialization, the aforementioned program code instructions are transferred from the non-volatile memory 303 to the volatile memory 301 so as to be executed by the processor 302. The volatile memory 301 likewise includes registers for storing the variables and parameters required for this execution. Alternatively, the aforementioned program code instructions may be directly read by the processor 302 from the non-volatile memory 303 for execution.

The steps of the method for improving the resilience of the electronic device 110 to fault attacks may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the electronic device 110 is implemented in a smart card.

Referring now to **Figure 4****,** we describe a method for improving the resilience of the electronic device 110 to fault attacks according to one embodiment of the present disclosure.

More particularly, in a **step S400,** the electronic device 110 executes a first command. Such command may be any command (or instruction) that can be executed by a processor 302 or a dedicated computing machine of the electronic device 110, e.g. a write command, a read command, a add command, etc.

Back to Figure 4, in a **step S410,** electronic device 110 generates a first random number.

In a **step S420,** the electronic device 110 generates a second random number.

In a **step S430,** the electronic device 110 decides, based on the first random number, to execute or not a step S440. For instance, if a value of the first random number is above (respectively below) a predetermined threshold, the electronic device 110 executes the step S440. Conversely, if the value of the first random number is below (respectively above) the predetermined threshold, the electronic device 110 does not execute the step S440.

Back to Figure 4, when the electronic device 110 decides to not execute the step S440, the electronic device 110 is ready for a next iteration of the method, i.e. for a next iteration of step S400 for executing another command.

Conversely, when the electronic device 110 decides to execute the step S440, in the **step S440** the electronic device 110 executes, after a predetermined period of time T_op (e.g. a non-vanishing or non-null period of time) counted from the end of the execution of the first command, one (or more) operation 210 changing the internal state of the electronic device 110 to an internal state indicative that a fault was detected or not during the execution of the first command in step S400.

Thus, whereas according to known technics, an operation 200 to change the internal state of the electronic device 110 to an internal state indicative that a fault was detected during the execution of a given command is executed before the end (i.e. up to having a same ending time of execution) of the considered command, according to the present technic the execution of an operation 210 changing the internal state of the electronic device 110 to an internal state indicative that (e.g. according to predefined policy rules) a fault was detected or not during the execution of the considered command is performed after the end of the execution of the considered command. The execution of the operation 210 thus takes place during a time window wherein the attacker does not expect the execution of such operation(s). This allows masking that a fault has potentially been detected by the attacked electronic device 110, and thus improving the resilience of the attacked electronic device 110 against fault attacks. Moreover, the new internal state may also be indicative that (e.g. according to the predefined policy rules) a fault was not detected during the execution of the considered command, thus further improving the masking of the meaning of the change in the internal state from the attacker's point of view.

Furthermore, using the first random number to decide to execute or not the step S440, the operation 210 changing the internal state of the electronic device 110 is not systematically executed, even if a fault is detected. Conversely, the step S440 may be executed even if a fault was not detected. Consequently, the attacker cannot learn from a systematic execution of such operation 210 that corresponding faults are detected by the attacked electronic device 110. This allows further masking that a fault has been detected by the attacked electronic device 110. This further improves the resilience of the electronic device 110 against fault attacks.

However, in other embodiments, the step S410 and thus the step S430 are not executed. In such embodiments, the step S440 is systematically executed after the execution of the step S400.

Back to Figure 4, after the execution of the step S440, the electronic device 110 is ready for a next iteration of the method, i.e. for a next iteration of step S400 for executing another command.

In the present embodiment, the predetermined period of time T_op is a function of the second random number. Thus, the time at which the operation 210 is executed is randomized. Consequently, the attacker cannot learn from a systematic execution of such operation 210 that corresponding faults are detected by the attacked electronic device 110. This allows further masking that a fault has been detected by the attacked electronic device 110. This further improves the resilience of the electronic device 110 against fault attacks.

However, in other embodiments, the step S420 is not executed. In such embodiments, the predetermined period of time T_op is thus not a function of the second random number. In such case, the predetermined period of time T_op is e.g. set to a default value.

In some embodiments, the electronic device 110 executes a second command (or instruction) after the execution of the first command during another iteration of the step S400. If the second command is executed before the end of the period of time T_op, the one (or more) operation 210 is executed substantially at the time the execution of the second command starts instead of being executed after the period of time T_op counted from the end of the execution of the first command.

Thus, the electronic device 110 executes the one (or more) operation 210 before another command is to be executed. The electronic device thus does not execute the other command before the fault handling of the first command is done.

In some embodiments, if a fault is detected by the fault detection mechanism during the execution of the first command (step S400), the one (or more) operation 210 changes the internal state of the electronic device 110 to an internal state indicative that a fault was detected. For instance, such operation 210 belongs to the group comprising:
- writing in a non-volatile memory 303 an information indicative that a fault was detected. The meaning of such information may be determined e.g. according to predefined policy rules;
- shutting-down the electronic device 110;
- writing in a non-volatile memory 303 an instruction preventing the electronic device 110 from booting; and
- writing in a non-volatile memory 303 a fake data in place of sensitive data. For instance, the electronic device 110 writes random data or zeros in place of the sensitive data (e.g. a cryptographic key). This corresponds e.g. to a zeroisation mechanism.

Conversely, in some embodiments, if a fault is not detected by the fault detection mechanism during the execution of the first command (step S400), the one (or more) operation 210 changes the internal state of the electronic device 110 to another internal state indicative that no fault was detected. For instance, such operation 210 belongs to the group comprising:
- writing in a non-volatile memory 303 dummy data; and
- writing in a non-volatile memory 303 an information indicative that no fault was detected. The meaning of such information may be determined e.g. according to predefined policy rules.

## Claims

1. Method for improving the resilience of an electronic device (110) to fault attacks, the electronic device implementing a fault detection mechanism during the execution of at least one command,
**characterized in that** the electronic device executes:
- executing (S400) a first command; and
- executing (S440), after a predetermined period of time counted from an end of the execution of the first command, at least one operation changing the internal state of the electronic device to an internal state indicative that a fault was detected or not during the execution of the first command.

2. Method according to claim 1, wherein the electronic device executes:
- generating (S410) a first random number;
- deciding (S430), based on the first random number, to execute or not said executing the at least one operation changing the internal state of the electronic device; and, if it is decided to execute the operation: executing said executing (S430) the at least one operation.

3. Method according to claim 2, wherein if, during said deciding, it is decided to not execute the at least one operation: not executing said executing the at least one operation.

4. Method according to any of the claims 1 to 3, wherein the electronic device executes:
- generating (S420) a second random number;
wherein the predetermined period of time is a function of the second random number.

5. Method according to claim 4, wherein the electronic device executes:
- executing (S400) a second command after said executing a first command;
wherein, if the second command is executed before an end of the period of time, the at least one operation is executed substantially at a time the execution of the second command starts instead of being executed after the period of time counted from the end of the execution of the first command.

6. Method according to any of the claims 1 to 5, wherein, if a fault is detected by the fault detection mechanism during the execution of the first command, the at least one operation changes the internal state of the electronic device to an internal state indicative that a fault was detected.

7. Method according to claim 6, wherein the at least one operation belongs to the group comprising:
- writing in a non-volatile memory an information indicative that a fault was detected;
- shutting-down the electronic device;
- writing in a non-volatile memory an instruction preventing the electronic device from booting; and
- writing in a non-volatile memory a fake data in place of sensitive data.

8. Method according to any of the claims 1 to 6, wherein, if a fault is not detected by the fault detection mechanism during the execution of the first command, the at least one operation changes the internal state of the electronic device to another internal state indicative that no fault was detected.

9. Method according to claim 8, wherein the at least one operation belongs to the group comprising:
- writing in a non-volatile memory dummy data; and
- writing in a non-volatile memory an information indicative that no fault was detected.

10. Computer program product **characterized in that** it comprises program code instructions for implementing a method according to at least one of the claims 1 to 9, when said program is executed on a computer or a processor.

11. Electronic device (110) implementing a fault detection mechanism during the execution of at least one command,
**characterized in that** it comprises a processor (302) or a dedicated computing machine configured for:
- executing a first command; and
- executing, after a predetermined period of time counted from an end of the execution of the first command, at least one operation changing the internal state of the electronic device to an internal state indicative that a fault was detected or not during the execution of the first command.
